# EUROPEAN PATENT SPECIFICATION

(11) **EP 1 638 285 B1**
(45) Date of publication and mention of the grant of the patent: **02.06.2010**
(21) Application number: 04255698.5
(22) Date of filing: 18.09.2004
(51) Int. Cl.: H04L 29/06

(54) **Apparatus of dynamically assigning external home agent for mobile virtual private networks and method for the same**
Vorrichtung und Verfahren zur dynamischen Zuweisung eines externen Lokalvertreters für private virtuelle Netze
Appareil et procédé pour l'attribution dynamique d'un agent local externe pour des réseaux privés virtuels

(43) Date of publication of application: 22.03.2006
(73) Proprietor: ZyXEL Communications Corporation, Hsin-Chu, Taiwan (TW)
(72) Inventor: Chen,Jyh-Cheng, Hsin-Chu (TW); Lin, Li-Wei, Hsin-Chu (TW); Liu, Yi-Wen, Hsin-Chu (TW)
(74) Representative: Viering, Jentschura & Partner

(56) References cited:
- WO-A-2004/004281
- AAA WORKING GROUP: "Diameter Mobile IPv4 Application" INTERNET DRAFT, [Online] August 2004 (2004-08), pages 1-44, XP002318024 Retrieved from the Internet: URL:http://www.ietf.org/internet-drafts/dr aft-ietf-aaa-diameter-mobileip-20.txt> [retrieved on 2005-02-16]
- S. VAARALA (ED.): "Mobile IPv4 Traversal Across IPsec-based VPN Gateways" INTERNET-DRAFT, [Online] 29 September 2003 (2003-09-29), pages 1-41, XP002318025 Retrieved from the Internet: URL:http://www.watersprings.org/pub/id/dra ft-ietf-mobileip-vpn-problem-solution-03.t xt> [retrieved on 2005-02-16]

## Description

### BACKGROUND OF THE INVENTION

### 1. Field of the Invention

The present invention relates to an apparatus of dynamically assigning external home agent (x-HA) for mobile virtual private networks (VPNs) and method for the same; especially to an apparatus of dynamically assigning x-HA for IPsec-based mobile VPNs and method for the same.

### 2. Description of Prior Art

The virtual private network (VPN) is developed to provide a dedicated channel between a remote computer and a local server through a wide area network such as Internet. The VPN also provides measure to ensure the security of communication, just like the trusted internal network (Intranet).

More particularly, VPN provides following measures to ensure security:
1. User authentication: VPN has rigorous authentication upon user and allow the log in for authenticated user only.
2. Address administration: VPN provides dedicated address for authenticated user with ensured security.
3. Data encryption: The data transmitted through Internet is encrypted to prevent from peeping by unauthenticated user.
4. Key management: VPN generates and frequently updates the key between user computer and server.
5. Protocol compatibility: VPN supports popular Internet protocols such as Point-to-Point Tunneling Protocol (PPTP), Layer2 Tunneling Protocol (L2TP) and IPsec.

Internet protocol (IP) is the most popular communication protocol for computer network. However, IP does not take security issue into account and therefore the IPsec protocol is defined by Internet Engineering Task Force (IETF) in Request for Comments (RFC) 2401. The IPsec protocol is used to encrypt the IP data flow and prevent data from modifying and inspection by third party and prevent data from simulation, fetching and playback.

Considering mobility for VPN users, Mobile IPv4 (IETF RFC 3344) is adopted in mobile VPN architecture. However, there are some technical issues needed to be resolved when incorporating Mobile IP (MIP) into IPsec-based VPN gateway.

When a mobile node (MN), such as a notebook computer with wireless communication equipment, roams in an Intranet, a Mobile IP (MIP) is assigned to the MN by a Home Agent (HA). When the MN moves out of Intranet, i.e. roams in an external network such as Internet, it must establish the IPsec tunnel with an IPsec-based VPN gateway before registering with the Home Agent (HA).

During movement, the MN would get a new care-of address (CoA) from the external network. It requires the VPN gateway refresh IPsec tunnel endpoints after MN's each movement into a new IP subnet. However, all packets including MIP messages are encrypted by IPsec protocol. Therefore, FA cannot decrypt MIP messages. Thus, FA is unable to relay MIP messages.

In order to overcome these problems, the IETF MIP4 Working Group (WG) is proposing a mechanism to support international seamless roaming (ISR) for VPN users.

In above-motioned mechanism, there are two HAs for internal and external networks respectively. Namely, an internal HA (i-HA) is provided for MN's mobility management inside Intranet, and an external HA (x-HA) is provided for the MN's mobility management in the external network when the MN moves out of Intranet and roams in the external network.

The x-HA is augmented to encapsulate the IPsec tunnel with the x-MIP tunnel. Therefore, the IPsec tunnel will not break when MN gets a new CoA. The FA will also be able to understand the MIP messages. By the IETF solution, there is no modification to Mobile IPv4 and IPsec standards. Only some changes are necessary for MN.

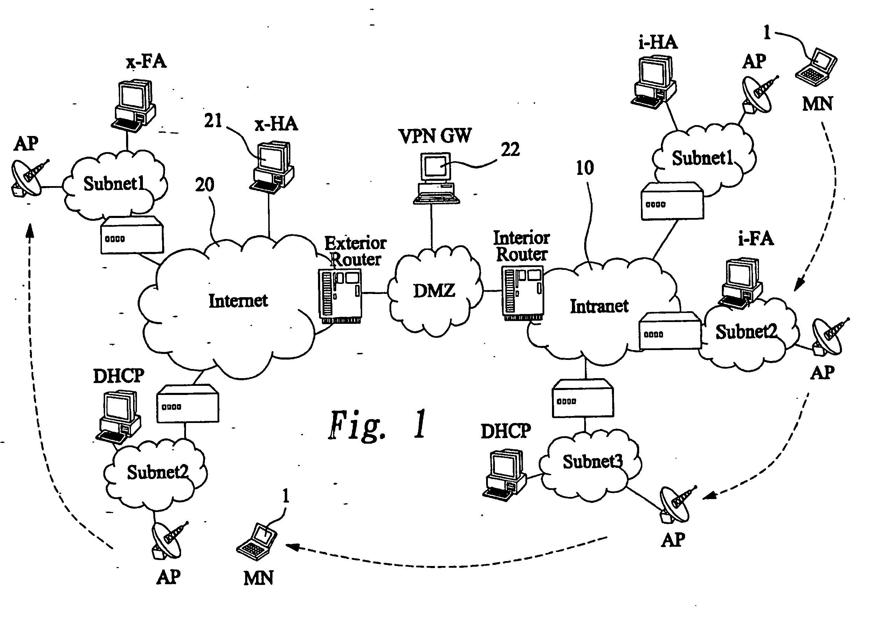

**Fig. 1** is a schematic diagram of mobile VPN architecture defined by IETF. In this figure, an MN **1** roams in Intranet **10** through an i-HA **11.** The MN **1** requires registering to an x-HA **21** for obtaining a new CoA when the MN moves from Intranet **10** to Internet **20.** Afterward the MN 1 then uses its external home address (x-HoA) to build an IPsec channel with the home VPN gateway **22** through Internet Key Exchange (IKE). The VPN-TIA (VPN Tunnel Inner Address) is also assigned after IKE negotiation accomplishes. Lasting, the MN 1 then registers the VPN-TIA to the i-HA **11** as its internal co-located CoA. These i-MIP registration messages will be encrypted by IPsec ESP (Encapsulating Security Payload) between MN and the VPN gateway. Therefore, the VPN for MN is established when roaming in Intranet **10** and Internet **20.**

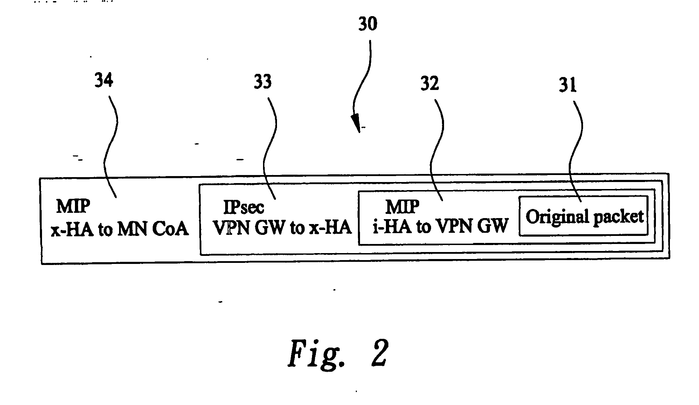

**Fig. 2** shows the message structure of the mobile VPN as MN moves from Intranet **10** to Internet **20.** The message contains an original packet **31,** an i-MIP channel message **32** encapsulating the original packet **31** and used for the i-HA 11 and the VPN gateway **22,** an IPsec channel massage **33** encapsulating the i-MIP channel message **32** and used for the VPN gateway **22** and the x-HA **21,** and an x-MIP channel massage **34** encapsulating the IPsec channel massage **33** and used for the x-HA **21** and MN **1**.

Such systems are disclosed in "Diameter Mobile IPv4 Application" the AAA Working Group (Internet draft), August 2004; pages 1-44, as well as "Mobile IPv4 Traversal across Ipsec-based VPN Gateways", S Vaarala, (Internet draft), 29 September 2003 and WO 2004/004281 A Cisco Technology, Inc, 8 Jan 2004.

The solution, however, leads to two questions: where should we put the x-HA and how should we trust the x-HA?

In conventional approach of IETF, a static x-HA 21 is provided in Internet 20. The placement of x-HA will impact the handoff latency between the FA and the x-HA 21 and end-to-end latency when the Internet 20 has a plurality of subnets. In addition, the x-HA is outside VPN and might not be under the control of the VPN. Therefore, there should be a trusted mechanism to assign the x-HA.

The present invention is intended to assign the x-HA dynamically so the handoff latency and end-to-end latency could be minimized. Moreover, AAA (Authentication, Authorization and Accounting) technique is also adopted so that the x-HA can be associated with the VPN securely.

### SUMMARY OF THE INVENTION

It is an object to provide an apparatus of dynamically assigning external home agent (x-HA) for mobile Virtual Private Networks (VPNs) and method for the same. The external HA closest to the MN in the visited external network is selected for mobility management of the MN. The MN only need to register with the same external HA when roaming in the same external network. The handoff latency and end-to-end latency for a roaming MN, therefore, could be reduced significantly. It will also not reestablish the IPsec tunnel within the same external network.

To achieve the object, the present invention provides a method of dynamically assigning external home agent (x-HA) for mobile Virtual Private Networks (VPNs). The method establishes VPN between at least one external network and an internal network and enabling at least mobile node (MN) roam in the external networks with security. The MN sends a Registration Request (Reg-Req) message to an external foreign agent (x-FA) when the MN roams to the external network for the first time. The x-FA then issues an AA-Mobile-Node-Request (AMR) message to a foreign AAA (AAAF) server. The AAAF server fills the Network Access Identifier (NAI) of a candidate x-HA in AMR message and sends the AMR message to the home AAA (AAAH) server. The AAAH server establishes a security association (SA) among the candidate x-HA, the x-FA and the MN and generates a Home-Agent-MIP-Request (HAR) message for sending to the x-HA. The x-HA allocates an external home address (x-HoA) for the MN and fills the x-HoA and its address in the Home-Agent-MIP Answer (HAA) message. The x-HA then sends the HAA message to the AAAH server. The AAAH sever uses the pre-configured VPN-TIA as the internal CoA of the MN for registration to the i-HA, and the i-HA authorizes the AAAH server to send an AA―Mobile-Node-Answer (AMA) message to the x-FA. The x-FA obtains a Reg-Reply message from the AMA message and containing the x-HoA and HA addresses; and relays the Reg-Reply message to the MN. When the MN roams in the authorized external network, the MN uses the x-HoA for registration to the assigned x-HA, whereby the MN registers to a closest x-HA when roaming in the external network.

To achieve the object, the present invention provides an apparatus of dynamically assigning external home agent (x-HA) for mobile Virtual Private Networks (VPNs). The method establishes VPN between at least one external network and an internal network and enabling at least mobile node (MN) roam in the external networks with security. The apparatus of dynamically assigning x-HA comprises an internal home agent (i-HA), at least one external home agent (x-HA), a VPN gateway, at least one agent assigner (AAA servers), and at least one external foreign agent (x-FA). The i-HA is arranged in the internal network and manages a roaming registration for the MN when roaming in the internal network. The x-HA is arranged in the external network and manages a roaming registration for the MN when roaming in the external network. The VPN gateway establishes an IPsec channel between the internal network and the x-HA to ensure a secure connection of the MN to the internal network when the MN roams in the external network. The agent assigner (AAA server) is used for dynamically and securely assigning a reliable x-HA closest to the authenticated and authorized MN for managing the roaming registration for the MN. The x-FA is used for managing a roaming registration of the MN with respect to the x-HA, the agent assigner and the i-HA when the MN roams to the external network for the first time. The x-FA relays the IPsec channel between the MN and the VPN gateway, whereby the MN registers to a closest x-HA when roaming in the external network.

Further embodiments according to the present invention are set forth in the dependent claims.

The above summaries are intended to illustrate exemplary embodiments of the invention, which will be best understood in conjunction with the detailed description to follow, and are not intended to limit the scope of the appended claims.

### BRIEF DESCRIPTION OF DRAWING:

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
Fig. 1 is a schematic diagram of mobile VPN architecture defined by IETF.
Fig. 2 shows the message structure of the mobile VPN as MN moves from Intranet to Internet.
Fig. 3 depicts the network topology for mobile VPN with dynamic x-HA assignment according to the present invention.
Fig. 4 is registration message flow of MN in Intranet.
Fig. 5 is a registration flowchart of MN roaming in Intranet.
Fig. 6 is registration message flow of MN in Internet.
Figs. 7A and 7B show registration flowchart of MN roaming in Internet.

### DETAILED DESCRIPTION OF THE INVENTION

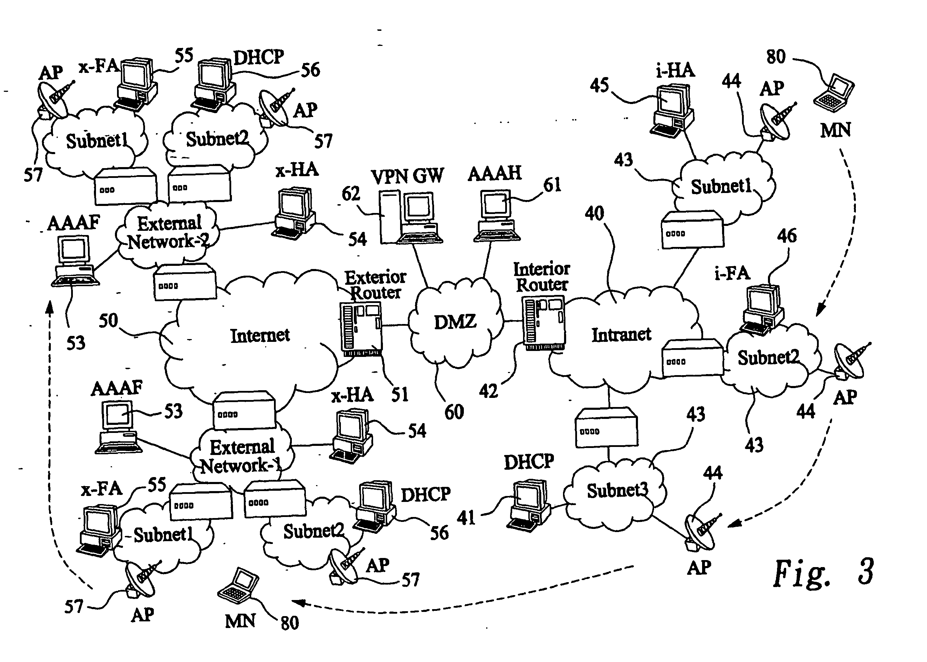

**Fig. 3** depicts the network topology for mobile VPN with dynamic x-HA assignment according to the present invention. An HA located in Internet and closest to the MN **80** is assigned as the x-HA **54** for the MN. The MN **80** can register to the x-HA **54** for establishing IPsec channel for the mobile VPN.

The x-HA in visited domain (public Internet network) can be dynamically allocated by using DHCP server, AAA (Authentication, Authorization and Accounting) server, DNS server, etc. An optimal HA is chosen for MN in geographical distant locations. Because the x-HA **54** is assigned closely to the MN **80,** the latency between the x-HA **54** and MN **80** could be drastically reduced. Besides, the inter-subnet handoff will be faster. Moreover, the load among a group of HAs could also be balanced by administrative policies.

The x-HA must be authenticated and authorized before it is assigned to the MN. Therefore, the AAA server should be adopted to assign the x-HA **54.** The present invention employs the Diameter (IETF RFC 3588) as an AAA server. By using Diameter Mobile IPv4 application, the Diameter can not only assign x-HA for MN in foreign administrative domain, but also serve as the key distribution center (KDC) to establish the security association (SA) dynamically between mobility agents, including MN.

**Fig. 3** shows an Intranet **40** and at least one public Internet network **50.** The Intranet **40** is a protected private network and is connected to a DHCP server **41** and an interior router **42.** The interior router **42** is connected to Internet through a DMZ (demilitarized zone), which is connected to home AAA server (AAAH) **61,** a VPN gateway **62** and an exterior router **51.** The exterior router **51** is connected to the public Internet network **50.**

The Intranet **40** comprises a plurality of subnets **43,** each connected to at least one wireless access point (WAP) **44** for wireless linking to at least one MN **80.** The Intranet **40** further comprises an i-HA **45** and an internal foreign agent (i-FA) **46.** As shown in **Fig. 3****,** the i-HA **45** is connected to the first subnet 1, the internal foreign agent (i-FA) **46** is connected to the second subnet 2, and the DHCP server **41** is connected to the third subnet 3.

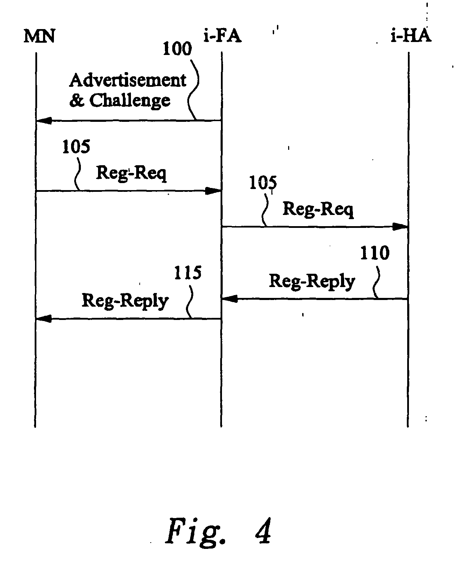

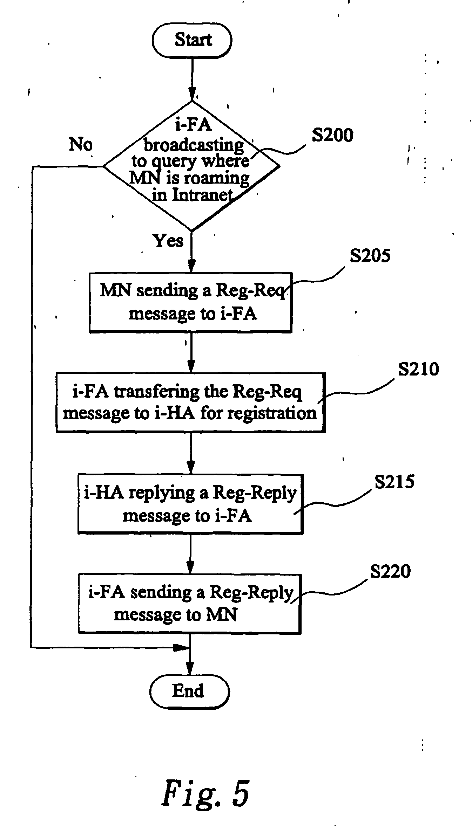

**Fig. 4** is registration message flow of MN **80** in Intranet **40** and **Fig. 5** is a registration flowchart of MN **80** roaming in Intranet **40.** When the MN **80** is operated in inter-realm seamless roaming mode, namely, roaming from the first subnet 1 to the second subnet 2, the i-FA **46** broadcasts an Advertisement & Challenge message **100** to query where the MN **80** is roaming in Intranet **40** at step **S200.** The MN **80** sends a Registration Request (Reg-Req) message **105** to the i-FA **46** at step **S205.** The i-FA **46** cannot identify the MN **80** such that the i-FA **46** transfers the Reg-Req **105** to the i-HA **45** for registration at step **S210.**

After registration, the i-HA **45** replies a Registration Reply (Reg-Reply) message **110** to the i-FA **46** at step **S215.** The i-FA **46** identifies the MN **80** by the Reg-Reply message **110** and then relays a Reg-Reply message **115** to the MN **80** at step **S220** to complete the registration procedure for intra-realm roaming.

With reference now to **Fig. 3****,** the Internet **50** is an unprotected public network and composed of a plurality of external networks, such as a first external network and a second external network. Each of the external networks comprises a plurality of subnets and connected to a foreign AAA server (AAAF) **53,** an x-HA **54,** an external foreign agent (x-FA) **55,** a DHCP server **56** and at least one WAP **57.**

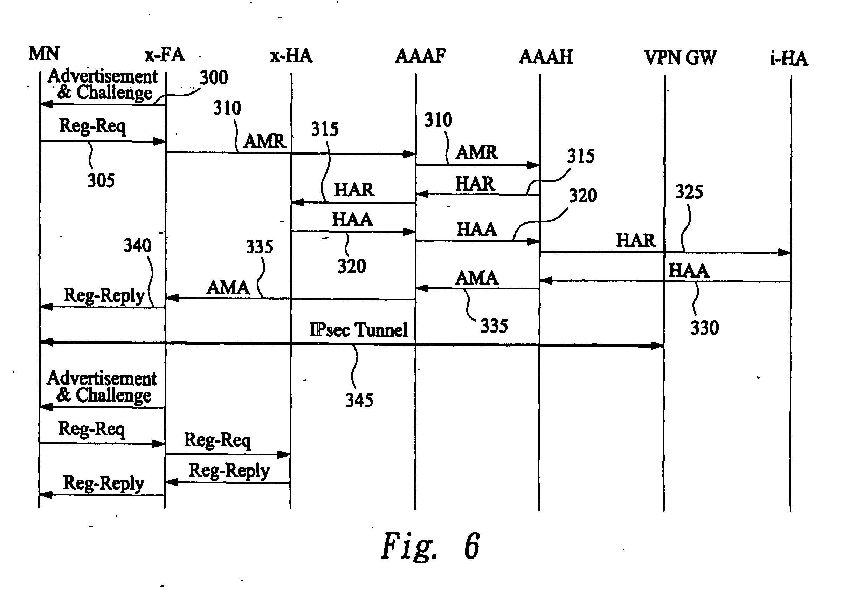

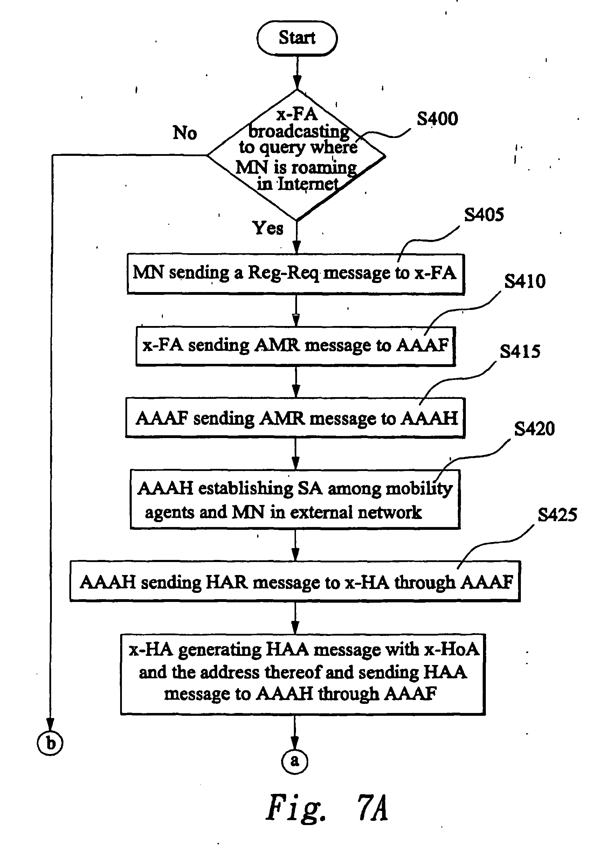

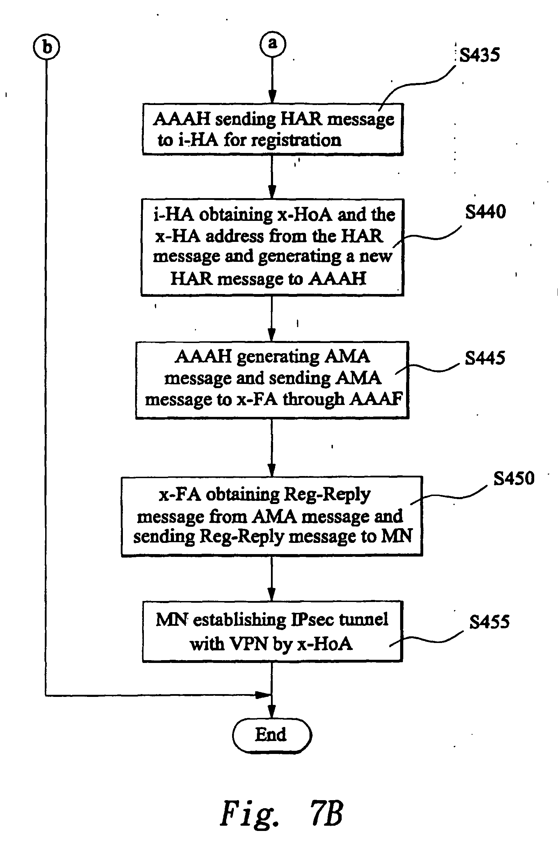

With reference now to **Figs. 6****,** **7A** and **7B****,** the registration flowchart and message flow for MN **80** roaming in Internet **50** are shown. When the MN **80** roams into the external network from the Intranet, the local x-FA 55 broadcasts an Advertisement & Challenge message **300** to query where the MN **80** is roaming in Internet **50** at step **S400.** The MN **80** sends a Registration Request (Reg-Req) message **305** to the x-FA 55 at step S405.

The Reg-Req message **305** comprises fields including a home address (HoA), an HA address, an authentication information for AAAH **61** and an MN's Network Access Identifier (NAI) etc.

In the Reg-Req message **305** received by the x-FA **55,** the addresses of HoA and HA address should be set as 0.0.0.0 to manifest that the MN **80** intends to get an External Home Address (x-HoA) from the Internet and to know the address of the x-HA. The x-FA **55** then generates an MIP-Feature-Vector AVP (Attribute Value Pair) with setting the flags of Mobile-Node Home-Address-Requested and Home-Agent-Requested.

At this time, the x-FA **55** encapsulates the MIP-Feature-Vector AVP and other required AVPs into an AA-Mobile-Node-Request (AMR) message **310.** The AMR message **310** is then sent to the AAAF **53** at step **S410.**

The AAAF **53** authorizes the AMR message **310** from the trusted x-FA **55,** and the AAAF **53** will check whether the Home-Agent-Requested flag in the MIP-Feature-Vector AVP is one.

If the Home-Agent-Requested bit is one, the AAAF **53** asks the AAAH **61** to assign an x-HA **54** in the foreign network as the HA of the MN **80** by setting the Foreign-Home-Agent-Available flag to one in the MIP-Feature-Vector AVP and fills the candidate x-HA's NAI in the MIP-Candidate-Home-Agent-Host AVP At last, the AAAF **53** forwards the AMR **310** to the AAAH **61** at step **S415.**

Upon receiving the AMR **310** from AAAF **53,** the AAAH **61** must authenticate the MN **80** first by the MIP-Reg-Req and MIP-MN-AAA-Auth AVPs **305.** The AAAH **61** determines a security policy for the MN **80** (such as cryptographic algorithm or longterm shared key) by the MN-AAA-SPI (Security Paremeters Index) AVP in the grouped MIP-MN-AAA-Auth AVP **310.**

If the authentication is successful, the AAAH **61** will check whether Home-Agent-Requested and Foreign-Home-Agent-Available bits are set to one in the MIP-Feature-Vector AVP of the AMR message **310.** If true, the dynamic x-HA assignment in visited realm is requested. At step **S420,** the AAAH **61** then establishes the SA among mobility agents and MN (for MN **80** and x-HA **54,** for MN **80** and x-FA **55** or for x-FA **55** and x-HA **54).**

The AAAH **61** generating random numbers at least 128 bits known as key materials (also called nonces) to derive requested session keys for setting up the SAs.

The MIP-Feature-Vector AVPs in the AMR message **310** issued by the x-FA **54** and the AAAF **53** also include a plurality of Key-Requests. The Key- Requests include MN-HA-Key-Requested for the MN **80** and the x-HA **54,** the MN-FA-Key-Request for the MN **80** and the x-FA **55,** and the FA-HA-Key-Request for the x-FA **55** and x-HA **54.**

Via the Diameter protocol, the derived session keys can be securely transmitted to the x-FA **55** and x-HA **54.** This is because the IPsec or Transport Layer Security (TLS, IETF RFC 2246) is mandatory to apply on protecting communication data between Diameter nodes (including servers, clients and agents). On the other hand, the nonces are instead propagated to the MN **80** because the session keys will be exposed through unprotected Mobile IP protocol.

Afterwards, the AAAH **61** issues the Home-Agent-MIP-Request (HAR) message **315** encapsulated with session key and Reg-Req message to the candidate x-HA through the proxy AAAF **53** at step **S425.**

If the session keys are requested in the received HAR message **315,** the MIP-HA-to-FA-Key (containing the xHA-xFA session key), MIP-MN-to-FA-Key (containing the MN-xFA nonce), and MIP-MN-to-HA-Key (containing the MN-xHA nonce) AVPs are also appended to the HAR message **315.**

Therefore, the x-HA **54** can get the session key for the x-HA **54** and the x-FA **55,** the nonces for the MN **80** and the x-FA **55,** and the session key and nonce for the MN **80** and the x-HA **54** from the AVPs in the HAR message **315.**

If MIP-Mobile-Node-Address AVP is absent in the received HAR message **315** for the x-HA **54** and Mobile-Node-Home-Address-Requested flag is set to one in the MIP-Feature-Vector AVP, the x-HA will allocate an external home address (x-HoA) for the MN **80** within the MIP-Mobile-Node-Address AVP Moreover, the x-HA **54** fills its address in the MIP-Home-Agent-Address AVP if Home-Agent-Requested flag is equal to one.

The x-HA **54** then saves the MN-xHA session key and copies the nonce to the Registration Reply (Reg-Reply) message. The x-HA **54** then generates a Home-Agent-MIP-Answer (HAA) message **320** and sends the HAA message **320** to the AAAH **61** through the AAAF **53** at step **S430.** The HAA **320** comprises necessary AVPs like MIP-Reg-Reply AVP, Result-Code AVP, MIP-Mobile-Node-address AVP with the x-HoA of the MN 80 and an MIP-Home-Agent-Address AVP with x-HA **54** address.

After the AAAH **61** receives the HAA message **320** sent by the x-HA **54** through the AAAF **53,** the AAAH **61** obtains the x-HoA of MN **80** from the MIP-Mobile-Node-Address AVP, and obtains the address of the x-HA **54** from the MIP- Home-Agent-Address AVP.

Afterward, the AAAH **61** establishes a new HAR message **325** and fills the i-HoA and VPN-TIA into the MIP-Mobile-Node-Address AVP and our defined VPN-Tunnel-Inner-Address AVP, respectively. The AAAH **61** then issues the HAR message **325** to the i-HA **45** for registration in step **S435.**

When the i-HA **45** receives the HAR message **325,** the i-HA **45** acquires the VPN-TIA from the AVP of the HAR message **325** and registers the VPN-TIA as the MN's internal Co-located CoA. Afterward, a new HAA message **330** is then constructed by the i-HA to acknowledge the HAR **325** and sent to the AAAH **61** at step **S440.**

On receipt of both the HAA messages **330** from the x-HA and i-HA with Result-Code AVP indicating success, the AAAH **61** creates the AA―Mobile-Node-Answer (AMA) message **335** with DIAMETER_SUCCESS Result-Code and the necessary AVPs (including the MIP-Home-Agent-Address, MIP-Mobile-Node-Address and MIP-Reg-Reply) are copied from the received HAA message **330.** The AMA message **335** is sent to the x-FA **55** through the proxy AAAF **53** at step **S445.**

If the AMA message **335** contains the MIP-MN-to-FA-Key AVP for the MN **80** and the x-FA **55** and the MIP-HA-to-FA-Key AVP for the x-HA **54** and the x-FA **55,** the x-FA **55** will receive the session key for the MN **80** and the x-FA **55** and the session key for the x-HA **54** and the x-FA **55.**

When the x-FA **55** receives the AMA message **335** with Result-Code AVP indicating success from the AAAH **61,** it obtains the Reg-Reply message **340** from the MIP-Reg-Reply AVP in the received AMA message **335** and forwards it to the MN **80** at step **S450.**

Otherwise, the x-FA **55** will silently discard this AMA message **335.**

Once the MN **80** receives the Reg-Reply message **340,** the MN **80** gets its new x-HoA, x-HA address and nonces. The MN **80** then calculates the correct session keys with the received nonces and longterm shared key by the same hashing algorithm as the AAAH **61** used.

Through the session keys, the MN **80** can directly establish Mobile IPv4 registration to the x-HA **54** without involving AAA infrastructure. The MN **80** can connect to the VPN gateway through x-HoA. Finally, the MN **80** sets up IPsec tunnel **345** with the VPN gateway through IKE negotiation at step **S455** and resumes the previous safe communication as in internal network.

After completion of the x-HA **54** assignment, the SA between HAs is established. Thus, the MN **80** can directly communicate with the x-HA **54** through the x-FA **55** as defined in MIPv4 standard without involving the Diameter infrastructure (AAA server). Furthermore, the MN **80** only needs to register with the assigned x-HA **54** when getting a new CoA in the foreign network. There is no need to register with the i-HA **45.** It will also not reestablish the IPsec tunnel within the same external network.

However, the session keys possess a lifetime. If the lifetime expires, the Diameter infrastructure (AAA server) must be invoked again to acquire new session keys. Besides, if the MN **80** moves into another foreign network and wants to request a new x-HA at local, the whole process discussed above will be executed. The x-HA will be reassigned. The IPsec tunnel is reestablished.

To sum up, the present invention replaces the static x-HA with dynamic x-HA. The handoff latency and end-to-end latency for a roaming MN, therefore, could be reduced significantly. Besides, the present invention leverages Diameter MIPv4 application to establish Security Associations between mobility agents. Thus, the x-HA could be trusted. In addition, the registrations with x-HA and i-HA are concurrently accomplished.

Although the present invention has been described with reference to the preferred embodiment thereof, it will be understood that the invention is not limited to the details thereof. Various substitutions and modifications have suggested in the foregoing description, and other will occur to those of ordinary skill in the art. Therefore, all such substitutions and modifications are intended to be embraced within the scope of the invention as defined in the appended claims.

## Claims

1. A method of dynamically assigning an external home agent, x-HA, for mobile Virtual Private Networks, VPNs, the method including establishing a VPN between at least one external network and an internal network and enabling at least one mobile node, MN, to roam in the external networks with security, the method comprising the steps of:
the MN sending a Registration Request, Reg-Req, message to an external foreign agent, x-FA, when the MN roams to the external network for the first time, wherein the Reg-Req message comprises fields including an external home address, x-HoA, request, and an external home agent, x-HA, address request;
the x-FA sending an AA-Mobile-Node-Request, AMR, message to a foreign AAA, AAAF, server, the AAAF server filling the Network Access Identifier, NAI, of a candidate x-HA in AMR message and sending the AMR message to a home AAA, AAAH, server AAA being Authentication, Authorization and Accounting,
the AAAH server establishing security associations, SAs, among the candidate x-HA, the x-FA and the MN and generating a Home-Agent-MIP-Request, HAR, message for sending to the x-HA;
the x-HA allocating an external home address, x-HoA, for the MN and filling the x-HoA and its address thereof in the Home-Agent-MIP-Answer, HAA, message, the x-HA then sending the HAA message to the AAAH server;
the AAAH server using a pre-configured VPN-TIA, VPN Tunnel Inner Address, as the internal CoA, care-of address, of the MN for registration to the i-HA, internal HA, the i-HA authorizing the AAAH server to send an AA-Mobile-Node-Answer, AMA, message to the x-FA; and
the x-FA obtaining a Reg-Reply message from the AMA message and containing x-HoA and HA address; and sending the Reg-Reply message to the MN;
whereby, when the MN roams in the external network, the MN uses the x-HoA for registration to the assigned x-HA with the x-HA address, whereby the MN registers to a closest x-HA when roaming in the external network.

2. The method of dynamically assigning external home agent as in claim 1, wherein the MN is a notebook computer with wireless network equipment

3. The method of dynamically assigning external home agent as in claim 1, further comprising the step before the MN roams in the external network for the first time:
the x-FA sending an Advertisement & Challenge message to the external network for asking whether any MN is roaming in the external network.

4. The method of dynamically assigning external home agent as in claim 1, wherein the Reg-Req message comprises an authentication information for AAAH and a Network Access Identifier, NAI, for the MN.

5. The method of dynamically assigning external home agent as in claim 1, wherein the Reg-Req message comprises fields including home address, HoA, and HA address, wherein HoA and HA address are set as 0.0.0.0.

6. The method of dynamically assigning external home agent as in claim 1, further comprising the steps after the MN roams the external network for the first time:
upon receiving Reg-Req message, the x-FA generating an MIP-Feature-Vector Attribute Value Pair, AVP, enabling Home-Address-Request and Home-Agent-Request flags; and
setting the MIP-Feature-Vector AVP to the Reg-Req message.

7. The method of dynamically assigning external home agent as in claim 1, further comprising a step after the x-FA sending the AMR message;
the AAAH server receiving the AMR message through the AAAF server and knowing a security policy of the MN through an MIP-MN-AAA-SPI, Security Parameters Index, in the AMR message.

8. The method of dynamically assigning external home agent as in claim 1, further comprising sub-steps in the step that the AAAH server establishes SA:
the AAAH server generating random numbers at least 128 bits functioned as key materials, the key materials being used to derive requested session keys for setting up SAs; and
encapsulating the session keys to the HAR message.

9. The method of dynamically assigning external home agent as in claim 1, wherein in the step that the AAAH server establishes SA, the HAR message is sent to the x-HA through the AAAF server.

10. The method of dynamically assigning external home agent as in claim 1, wherein in the step that the AAAH server establishes SA, the HAR message comprises MIP-HA-to-FA-Key containing an xHA-xFA session key, MIP-MN-to-FA-Key containing an MN-xFA nonce, MIP-MN-to-HA-Key containing an MN-xHA nonce, MIP-HA-to-MN-Key containing an MN-xHA session key.

11. The method of dynamically assigning external home agent as in claim 1, wherein in the step the x-HA allocating an x-HoA for the MN, the HAA message is sent to the AAAH server through the AAAF server.

12. The method of dynamically assigning external home agent as in claim 1, further comprising a sub-step in the step of sending the Reg-Reply message to the MN:
the MN connecting to a VPN gateway by using the x-HoA such that an IPsec channel is established between the MN and the VPN gateway.

13. A system for dynamically assigning an external home agent, x-HA, for mobile Virtual Private Networks, VPNs, the system including at least one external network and an internal network and the system establishing VPN between said at least one external network and said internal network and enabling at least mobile node, MN, to roam in the external networks with security, the system comprising:
an internal home agent, i-HA, arranged in the internal network and managing a roaming registration for the MN when roaming in the internal network;
at least one external home agent, x-HA, arranged in the external network and managing a roaming registration for the MN when roaming in the external network;
a VPN gateway establishing an IPsec channel between the internal network and the MN to ensure a secure convection of the MN to the internal network when the MN roams in the external network;
at least one agent assigner, AAA Authentication, Authorisation and Accounting, server, for dynamically and securely assigning a reliable x-HA closest to the authenticated and authorized MN for managing the roaming registration for the MN;
at least one external foreign agent, x-FA, for managing a roaming registration of the MN with respect to the x-HA, the agent assigner, AAAH, and the i-HA when the MN roams to the external network for the first time and for establishing an IPsec channel between the MN and the VPN gateway, whereby the MN registers to a closest x-HA when roaming in the external network.

14. The system of dynamically assigning external home agent as in claim 13, wherein the external network comprises a plurality of subnets.

15. The system of dynamically assigning external home agent as in claim 13, wherein the internal network comprises a plurality of subnets.

16. The system of dynamically assigning external home agent as in claim 13, wherein the MN is a notebook computer with wireless network equipment.

17. The system of dynamically assigning external home agent as in claim 13, wherein the VPN gateway and the agent assigner, AAAH, are placed in a demilitarized zone, DMZ, the DMZ is a physical region behind Internet and in front of a second firewall for protecting back-end system and data.

18. The system of dynamically assigning external home agent as in claim 17, wherein the DMZ is connected to the internal network through an internal router and connected to the external network through an external router.

19. The system of dynamically assigning external home agent as in claim 13, wherein the agent assigner is one of AAA server, DHCP server and DNS server.

20. The system of dynamically assigning external home agent as in claim 19, wherein the AAA server establishes security association, SA, for agents in a roamed network and functioned as a Key Distribution Center, KDC, besides assigning x-HA.

21. The system of dynamically assigning external home agent as in claim 20, wherein the AAA server is a Diameter, IETF RFC 3588, server.

22. The system of dynamically assigning external home agent as in claim 13, further comprising at least one internal foreign agent, i-FA, connected to at least one subnet in the internal network, whereby the MN registers to the i-HA through the i-FA when roaming in the internal network.

23. The system of dynamically assigning external home agent as in claim 13, further comprising at least one wireless access point, WAP, arranged in internal network or external network and used for providing a wireless accessing for the MN.

## Patentansprüche

1. Verfahren zum dynamischen Zuweisen eines externen Heim-Agenten, x-HA, für mobile virtuelle private Netzwerke, VPNs, wobei das Verfahren aufweist ein VPN zwischen mindestens einem externen Netzwerk und einem internen Netzwerk aufzubauen und es mindestens einem mobilen Knoten, MN, zu ermöglichen, sich in den externen Netzwerken sicher zu bewegen und wobei das Verfahren die Schritte aufweist:
der MN sendet eine Registrierungsanforderungs-Nachricht, Reg-Req-Nachricht, an einen externen Fremd-Agenten, x-FA, wenn der MN sich zum ersten Mal in das externe Netzwerk bewegt, wobei die Reg-Req-Nachricht Felder aufweist, die eine Externe-Heim-Adressen-Anforderung, x-HoA-Anforderung, und
eine Externer-Heimatagent-Adressen-Anforderung, x-HA-Adressen-Anforderung, beinhalten;
der x-FA sendet eine AA-Mobiler-Knoten-Anforderungs-Nachricht, AMR-Nachricht, an einen fremden AAA-Server, AAAF-Server, wobei der AAAF-Server den Netzwerkzugangsidentifikator, NAI, eines Kandidaten-x-HA in die AMR-Nachricht einfügt und die AMR-Nachricht an einen Heim-AAA-Server, AAAH-Server, sendet, wobei AAA Authentifizierung, Autorisierung und Abrechnung ist;
der AAAH-Server erstellt Sicherheitszuweisungen, SAs, unter dem Kandidaten-x-HA, dem x-FA und dem MN und erzeugt eine Heim-Agent-MIP-Anforderungs-Nachricht, HAR-Nachricht, zum Senden an den x-HA;
der x-HA teilt eine externe Heim-Adresse, x-HoA, für den MN zu und fügt den x-HoA und seine Adresse in die Heim-Agent-MIP-Antwort-Nachricht, HAA-Nachricht, ein und der x-HA sendet dann die HAA-Nachricht an den AAAH-Server;
der AAAH-Server verwendet eine vorkonfigurierte VPN-TIA, VPN-Innere-Tunnel-Adresse, als die interne CoA des MN zur Registrierung bei dem i-HA, interner HA, wobei der i-HA den AAAH-Server autorisiert, eine AA-Mobiler-Knoten-Antwort-Nachricht, AMA-Nachricht, an den x-FA zu senden; und
der x-FA erhält eine gesendete Reg-Antwort-Nachricht aus der AMA-Nachricht, die die x-HoA-Adresse und die HA-Adresse enthält, und sendet dann die Reg-Antwort-Nachricht an den MN; wobei, wenn sich der MN in das externe Netzwerk bewegt, der MN die x-HoA zur Registrierung bei dem zugewiesenen x-HA mit der x-HA-Adresse verwendet, wobei sich der MN bei einem nächstgelegenen x-HA registriert beim Bewegen in dem externen Netzwerk.

2. Verfahren zum dynamischen Zuweisen eines externen Heim-Agenten nach Anspruch 1, wobei der MN ein Notebook-Computer mit Drahtlos-Netzwerk-Ausstattung ist.

3. Verfahren zum dynamischen Zuweisen eines externen Heim-Agenten nach Anspruch 1, ferner aufweisend, bevor der MN sich zum ersten Mal in das externe Netzwerk bewegt, den Schritt:
der x-FA sendet eine Anzeige & Herausforderungs-Nachricht an das externe Netzwerk zum Erfragen, ob irgendein MN sich in dem externen Netzwerk bewegt.

4. Verfahren zum dynamischen Zuweisen eines externen Heim-Agenten nach Anspruch 1, wobei die Reg-Req-Nachricht eine Authentifizierungs-Information für AAAH und einen Netzwerkzugangsidentifikator, NAI, für den MN enthält.

5. Verfahren zum dynamischen Zuweisen eines externen Heim-Agenten nach Anspruch 1, wobei die Reg-Req-Nachricht Felder aufweist inklusive Heimat-Adresse, HoA, und HA-Adresse, wobei die HoA-Adresse und die HA-Adresse auf 0.0.0.0 gesetzt sind.

6. Verfahren zum dynamischen Zuweisen eines externen Heim-Agenten nach Anspruch 1, ferner aufweisend, nachdem sich der MN zum ersten Mal in dem externen Netzwerk bewegt, die Schritte:
beim Empfangen der Reg-Req-Nachricht erzeugt der x-FA ein MIP-Merkmalvektor-Attribut-Werte-Paar, AVP, wobei er das MN-Heim-Adressen-Anforderungs-Flag und das Heim-Agent-Anforderungs-Flag aktiviert; und
Setzen des MIP-Merkmalvektor-AVPs auf die Reg-Req-Nachricht.

7. Verfahren zum dynamischen Zuweisen eines externen Heim-Agenten nach Anspruch 1, ferner aufweisend, nachdem der x-FA die AMR-Nachricht gesendet hat, den Schritt;
der AAAH-Server empfängt die AMR-Nachricht mittels des AAAF-Servers und kennt eine Sicherheitsverfahrensweise des MN mittels eines MIP-MN-AAA-SPI, Sicherheitsparameterindex, in der AMR-Nachricht.

8. Verfahren zum dynamischen Zuweisen eines externen Heim-Agenten nach Anspruch 1, ferner aufweisend Teilschritte in dem Schritt, in dem der AAAH-Server die SA aufbaut:
der AAAH-Server erzeugt Zufallszahlen mit mindestens 128 Bits, verwendet als Schlüsselmaterial, wobei das Schlüsselmaterial verwendet wird zum Ableiten von angeforderten Sitzungs-Schlüsseln zum Aufbauen von SAs; und
Einkapseln der Sitzungsschlüssel in die HAR-Nachricht.

9. Verfahren zum dynamischen Zuweisen eines externen Heim-Agenten nach Anspruch 1, wobei in dem Schritt, in dem der AAAH-Server die SA aufbaut, die HAR-Nachricht zu dem x-HA mittels des AAAF-Servers gesendet wird.

10. Verfahren zum dynamischen Zuweisen eines externen Heim-Agenten nach Anspruch 1, wobei in dem Schritt, in dem der AAAH-Server die SA aufbaut, die HAR-Nachricht einen MIP-MN-an-FA-Schlüssel aufweist, der einen xHA-xFA-Sitzungsschlüssel enthält, wobei der MIP-MN-an-FA-Schlüssel eine MN-xFA-Nonce aufweist, der MIP-MN-an-HA-Schlüssel eine MN-xHA-Nonce aufweist und der MIP-HA-an-MN-Schlüssel einen MN-xHA-Sitzungsschlüssel aufweist.

11. Verfahren zum dynamischen Zuweisen eines externen Heim-Agenten nach Anspruch 1, wobei in dem Schritt, in dem der x-HA eine x-HoA-Adresse für den MN zuteilt, die HAA-Nachricht mittels des AAAF-Servers an den AAAH-Server gesendet wird.

12. Verfahren zum dynamischen Zuweisen eines externen Heim-Agenten nach Anspruch 1, ferner aufweisend einen Teilschritt in dem Schritt des Sendens der Reg-Antwort-Nachricht an den MN:
der MN verbindet sich mit einem VPN-Gateway unter Verwendung der x-HoA, so dass ein IPsec-Kanal zwischen dem MN und dem VPN-Gateway aufgebaut wird.

13. System zum dynamischen Zuweisen eines externen Heim-Agenten, x-HA, für mobile virtuelle private Netzwerke, VPNs, wobei das System mindestens ein externes Netzwerk und ein internes Netzwerk aufweist und das System VPN zwischen dem mindestens einen externen Netzwerk und dem internen Netzwerk aufbaut und es mindestens einem mobilen Knoten, MN, ermöglicht, sich in dem externen Netzwerken sicher zu bewegen, wobei das System aufweist:
einen internen Heim-Agenten, i-HA, der in dem internen Netzwerk angeordnet ist und eine Roaming-Registrierung für den MN verwaltet, wenn er sich in dem internen Netzwerk bewegt;
mindestens einen externen Heim-Agenten, x-HA, der in dem externen Netzwerk angeordnet ist und eine Roaming-Registrierung für den MN verwaltet, wenn er sich in dem externen Netzwerk bewegt;
ein VPN-Gateway, das einen IPsec-Kanal zwischen dem internen Netzwerk und dem MN aufbaut zum Gewährleisten einer sicheren Verbindung des MN zu dem internen Netzwerk, wenn sich der MN in dem externen Netzwerk bewegt;
mindestens einen Agent-Zuweiser, AAA-Server, zum dynamischen und sicheren Zuweisen eines zuverlässigen x-HA, nächstgelegen zu dem authentifizierten und autorisierten MN, zum Verwalten der Roaming-Registrierung für den MN;
mindestens einen externen Fremd-Agenten, x-FA, zum Verwalten einer Roaming-Registrierung des MN gegenüber dem x-HA, dem Agent-Zuweiser, AAAH, und dem i-HA, wenn der MN sich zum ersten Mal in das externe Netzwerk bewegt und zum Aufbauen eines IPsec-Kanals zwischen dem MN und dem VPN-Gateway, wobei sich der MN bei einem nächstgelegenen x-HA registriert, wenn er sich in dem externen Netzwerk bewegt.

14. System zum dynamischen Zuweisen eines externen Heim-Agenten nach Anspruch 13, wobei das externe Netzwerk eine Mehrzahl von Subnetzen aufweist.

15. System zum dynamischen Zuweisen eines externen Heim-Agenten nach Anspruch 13, wobei das interne Netzwerk eine Mehrzahl von Subnetzen aufweist.

16. System zum dynamischen Zuweisen eines externen Heim-Agenten nach Anspruch 13, wobei der MN ein Notebook-Computer mit Drahtlos-Netzwerk-Ausstattung ist.

17. System zum dynamischen Zuweisen eines externen Heim-Agenten nach Anspruch 13, wobei das VPN-Gateway und der Agent-Zuweiser, AAAH, in einer entmilitarisierten Zone DMZ platziert sind, wobei die DMZ ein physikalischer Bereich ist hinter dem Internet und vor einer zweiten Firewall zum Schützen von Backend-Systemen und Backend-Daten.

18. System zum dynamischen Zuweisen eines externen Heim-Agenten nach Anspruch 17, wobei die DMZ mit dem internen Netzwerk mittels eines internen Routers und mit dem externen Netzwerk mittels eines externen Routers verbunden ist.

19. System zum dynamischen Zuweisen eines externen Heim-Agenten nach Anspruch 13, wobei der Agent-Zuweiser eines ist von einem AAA-Server, einem DHCP-Server und einem DNS-Server.

20. System zum dynamischen Zuweisen eines externen Heim-Agenten nach Anspruch 19, wobei der AAA-Server eine Sicherheitszuteilung SA für Agenten in einem besuchten Netzwerk aufbaut und verwendet wird als Schlüsselverteilungszentrale, KDC, neben dem Zuweisen des x-HA.

21. System zum dynamischen Zuweisen eines externen Heim-Agenten nach Anspruch 20, wobei der AAA-Server ein Diameter-Server, IETF RFC 3588-Server, ist.

22. System zum dynamischen Zuweisen eines externen Heim-Agenten nach Anspruch 13, ferner aufweisend mindestens einen internen Fremd-Agenten, i-FA, der mit mindestens einem Subnetz in dem internen Netzwerk verbunden ist, wobei der MN sich bei dem i-FA registriert, wenn er sich in dem internen Netzwerk bewegt.

23. System zum dynamischen Zuweisen eines externen Heim-Agenten nach Anspruch 13, ferner aufweisend mindestens einen Drahtlos-Zugangs-Punkt, WAP, angeordnet in dem internen Netzwerk oder dem externen Netzwerk und verwendet zum Bereitstellen eines drahtlosen Zugangs für den MN.

## Revendications

1. Procédé destiné à assigner de manière dynamique un agent local externe, x-HA, pour des réseaux privés virtuels mobiles, VPN, le procédé comprenant les étapes consistant à établir un VPN entre au moins un réseau externe et un réseau interne et à permettre au moins à un noeud mobile, MN, de se déplacer dans les réseaux externes en sécurité, le procédé comprenant les étapes suivantes :
le MN envoie un message de demande d'enregistrement, Reg-Req, à un agent étranger externe, x-FA, lorsque le MN se déplace vers le réseau externe pour la première fois, dans lequel le message Reg-Req comprend des champs qui comprennent une demande d'adresse locale externe, x-HoA, et une demande d'adresse d'agent local externe, x-HA ;
le x-FA envoie un message de demande de noeud mobile AA, AMR, à un serveur AAA étranger, AAAF, le serveur AAAF remplissant l'identifiant d'accès au réseau, NAI, d'un candidat x-HA dans le message AMR et envoyant le message AMR à un serveur local AAA, AAAH, AAA signifiant authentification, autorisation et comptabilité ;
le serveur AAAH établi des association de sécurité, SA, parmi le candidat x-HA, le x-FA et le MN et génère un message de demande MIP d'agent local, HAR, à envoyer au x-HA ;
le x-HA assigne une adresse locale externe, x-HoA, pour le MN et remplissant la x-HoA et son adresse dans un message de réponse MIP d'agent local, HAA, le x-HA envoyant alors le message HAA au serveur AAAH ;
le serveur AAAH utilise une adresse interne de tunnel de VPN préconfigurée, VPN-TIA, comme adresse temporaire interne, CoA, du MN pour un enregistrement auprès du HA interne, i-HA, 1' i-HA autorisant le serveur AAAH à envoyer un message de réponse de noeud mobile AA, AMA, au x-FA ; et
le x-FA obtient un message de réponse d'enregistrement à partir du message AMA et qui contient la x-HoA et l'adresse du HA ; et envoie le message de réponse d'enregistrement au MN ;
grâce à quoi lorsque le MN se déplace dans le réseau externe, le MN utilise la x-HoA pour l'enregistrement auprès d'un x-HA assigné avec l'adresse du x-HA, grâce à quoi le MN s'enregistre auprès du x-HA le plus proche lors d'un déplacement dans le réseau externe.

2. Procédé destiné à assigner de manière dynamique un agent local externe selon la revendication 1, dans lequel le MN est un ordinateur portable doté d'un équipement de réseau sans fil.

3. Procédé destiné à assigner de manière dynamique un agent local externe selon la revendication 1, comprenant en outre, avant que le MN ne se déplace dans le réseau externe pour la première fois, l'étape suivante :
le x-FA envoie un message de publicité et d'intervention au réseau externe pour demander si un MN quelconque se déplace dans le réseau externe.

4. Procédé destiné à assigner de manière dynamique un agent local externe selon la revendication 1, dans lequel le message de demande d'enregistrement comprend des informations d'authentification du AAAH et un identifiant d'accès au réseau, NAI, du MN.

5. Procédé destiné à assigner de manière dynamique un agent local externe selon la revendication 1, dans lequel le message de demande d'enregistrement comprend des champs qui comprenant une adresse locale, HoA, et une adresse de HA, dans lequel la HoA et l'adresse du HA sont fixées à 0.0.0.0.

6. Procédé destiné à assigner de manière dynamique un agent local externe selon la revendication 1, comprenant en outre, une fois que le MN s'est déplacé dans le réseau externe pour la première fois, les étapes suivantes :
lors de la réception d'un message de demande d'enregistrement, le x-FA génère une paire de valeurs d'attributs, AVP, de vecteur de caractéristique MIP en validant les drapeaux de demande d'adresse locale et de demande d'agent local ; et
fixer l'AVP de vecteur de caractéristiques MIP au message de demande d'enregistrement.

7. Procédé destiné à assigner de manière dynamique un agent local externe selon la revendication 1, comprenant en outre l'étape suivante, une fois que le x-FA a envoyé le message AMR ;
le serveur AAAH reçoit le message AMR par l'intermédiaire du serveur AAAF et connaît une politique de sécurité du MN grâce à un index de paramètre de sécurité MIP-MN-AAA-SPI, dans le message AMR.

8. Procédé destiné à assigner de manière dynamique un agent local externe selon la revendication 1, comprenant en outre les étapes secondaires suivantes dans l'étape où le serveur AAAH établit une SA :
le serveur AAAH génère des nombres aléatoires de 128 bits au moins qui sont utilisés comme matériels de clé, les matériels de clé étant utilisés de manière à obtenir les clés de session requises pour établir les SA ; et
encapsuler les clés de session dans le message HAR.

9. Procédé destiné à assigner de manière dynamique un agent local externe selon la revendication 1, dans lequel dans l'étape où le serveur AAAH établit une SA, le message HAR est envoyé au x-HA par l'intermédiaire du serveur AAAF.

10. Procédé destiné à assigner de manière dynamique un agent local externe selon la revendication 1, dans lequel dans l'étape où le serveur AAAH établit une SA, le message HAR comprend une clé MIP HA vers FA qui contient une clé de session de xHA-xFA, une clé MIP MN vers FA qui contient un nonce MN-xFA, une clé MIP MN vers HA qui contient contenant un nonce MN-xHA, une clé MIP Ha vers MN qui contient une clé de session MN-xHA.

11. Procédé destiné à assigner de manière dynamique un agent local externe selon la revendication 1, dans lequel dans l'étape où le x-HA assigne une x-HoA pour le MN, le message HAA est envoyé au serveur AAAH par l'intermédiaire du serveur AAAF.

12. Procédé destiné à assigner de manière dynamique un agent local externe selon la revendication 1, comprenant en outre l'étape secondaire suivante dans l'étape consistant à envoyer le message de réponse d'enregistrement au MN :
le MN se connecte à une passerelle du VPN en utilisant la x-HoA de telle sorte qu'un canal IPsec soit établi entre le MN et la passerelle du VPN.

13. Système destiné à assigner de manière dynamique un agent local externe, x-HA, pour des réseaux privés virtuels mobiles, VPN, le système comprenant au moins un réseau externe et un réseau interne et le système établissant un VPN entre ledit au moins un réseau externe et ledit réseau interne et permettant au moins à un noeud mobile, MN, de se déplacer dans les réseaux externes en sécurité, le système comprenant :
un agent local interne, i-HA, disposé dans le réseau interne et gérant un enregistrement de déplacement du MN quand il se déplace dans le réseau interne ;
au moins un agent local externe, x-HA, disposé dans le réseau externe et gérant un enregistrement de déplacement du MN quand il se déplace dans le réseau externe ;
une passerelle de VPN qui établit un canal IPsec entre le réseau interne et le MN de manière à assurer une connexion sécurisée du MN au réseau interne lorsque le MN se déplace dans le réseau externe ;
au moins un dispositif d'assignation d'agent, serveur d'authentification, d'autorisation et de comptabilité, AAA, destiné à assigner de manière dynamique et sécurisé le x-HA fiable le plus proche du MN authentifié et autorisé pour gérer l'inscription l'enregistrement de déplacement du MN ;
au moins un agent étranger externe, x-FA, destiné à gérer un enregistrement de déplacement du MN par rapport au x-HA, au dispositif d'assignation d'agent, AAAH, et au i-HA lorsque le MN se déplace vers le réseau externe pour la première fois et à établir un canal IPsec entre le MN et la passerelle du VPN, grâce à quoi le MN s'enregistre auprès du x-HA le plus proche quand il se déplace dans le réseau externe.

14. Système destiné à assigner de manière dynamique un agent local externe selon la revendication 13, dans lequel le réseau externe comprend une pluralité de réseaux secondaires.

15. Système destiné à assigner de manière dynamique un agent local externe selon la revendication 13, dans lequel le réseau interne comprend une pluralité de réseaux secondaires.

16. Système destiné à assigner de manière dynamique un agent local externe selon la revendication 13, dans lequel le MN est un ordinateur portable doté d'un équipement de réseau sans fil.

17. Système destiné à assigner de manière dynamique un agent local externe selon la revendication 13, dans lequel la passerelle du VPN et le dispositif d'assignation d'agent, AAAH, sont placés dans une zone démilitarisée, DMZ, la DMZ étant une région physique derrière Internet et devant une deuxième barrière de sécurité destinée à protéger le système dorsal de traitement et les données.

18. Système destiné à assigner de manière dynamique un agent local externe selon la revendication 17, dans lequel la DMZ est connectée au réseau interne par l'intermédiaire d'un routeur interne et est connectée au réseau externe par l'intermédiaire d'un routeur externe.

19. Système destiné à assigner de manière dynamique un agent local externe selon la revendication 13, dans lequel le dispositif d'assignation d'agent est l'un d'un serveur AAA, d'un serveur DHCP et d'un serveur DNS.

20. Système destiné à assigner de manière dynamique un agent local externe selon la revendication 19, dans lequel le serveur AAA établit une association de sécurité, SA, pour des agents dans un réseau qui se déplace et qui est utilisé comme centre de distribution de clés, KDC, en plus de l'assignation du x-HA.

21. Système destiné à assigner de manière dynamique un agent local externe selon la revendication 20, dans lequel le serveur AAA est un serveur DIAMETER IETF RFC 3588.

22. Système destiné à assigner de manière dynamique un agent local externe selon la revendication 13, comprenant en outre au moins un agent étranger interne, i-FA, connecté au moins à un réseau secondaire dans le réseau interne, grâce à quoi le MN s'enregistre auprès du i-HA par l'intermédiaire du i-FA quand il se déplace dans le réseau interne.

23. Système destiné à assigner de manière dynamique un agent local externe selon la revendication 13, comprenant en outre au moins un point d'accès sans fil, WAP, disposé dans le réseau interne ou dans le réseau externe et utilisé de manière à fournir un accès sans fil pour le MN.
